# EUROPÄISCHE PATENTANMELDUNG

(11) **EP 0 753 342 A2**
(43) Veröffentlichungstag der Anmeldung: **15.01.1997**
(21) Anmeldenummer: 96110696.0
(22) Anmeldetag: 03.07.1996
(51) Int. Cl.: B01J 2/12

(54) **Feingranulator**

(30) Priorität: 08.07.1995 DE 19524923
(71) Anmelder: Alexanderwerk Aktiengesellschaft, D-42857 Remscheid (DE)
(72) Erfinder: Riedl, Max, 42859 Remscheid (DE)
(74) Vertreter: Cohausz & Florack

(57) **Zusammenfassung**

Die Erfindung betrifft eine Vorrichtung zum Granulieren von Produkten mit einem an seiner Oberseite eine Einfüllöffnung für das Produkt aufweisenden Gehäuse, an dessen Unterseite eine Austrittsöffnung für das granulierte Produkt vorgesehen ist, und mit einem drehbar im Gehäuse gelagerten antreibbaren Rotor, auf dessen Peripherie Behandlungselemente (41) angeordnet sind, mittels denen das Produkt beim Drehen des Rotors durch eine Siebvorrichtung gedrückt wird. Zur schonenden Granulierung von Feuchtprodukten ist erfindungsgemäß vorgesehen, daß das Behandlungselement frei drehbar im Rotor gelagert ist und einen in der Rotorperipherie (43) liegenden zylindrischen granulieraktiven Flächenbereich aufweist.

## Beschreibung

Die Erfindung betrifft eine Vorrichtung zum Granulieren von Produkten mit einem an seiner Oberseite eine Einfüllöffnung für das Produkt aufweisenden Gehäuse, an dessen Unterseite eine Austrittsöffnung für das granulierte Produkt vorgesehen ist, und mit einem drehbar im Gehäuse gelagerten antreibbaren Rotor, auf dessen Peripherie Behandlungselemente angeordnet sind, mittels denen das Produkt beim Drehen des Rotors durch eine Siebvorrichtung gedrückt wird.

Eine Vorrichtung dieser Art ist aus der Praxis bekannt und dient zur Aufbereitung von trockenen, kompaktierten Massen mit einem niedrigen Feuchtegehalt. Hierzu wird die zu granulierende Masse an der Oberseite des Gehäuses eingefüllt und gelangt in den Bereich des zentral im Gehäuse angeordneten Rotors, mittels dessen Behandlungselementen eine Beaufschlagung des Produktes erfolgt, in dem das Produkt mittels der Behandlungselemente gegen die der Rotorperipherie gegenüberliegende Innenseite eines Siebkorbes beaufschlagt insbesondere gepreßt wird.

Bei der aus der Praxis bekannten Vorrichtung sind als Behandlungselemente auf dem Rotorumfang angebrachte Leisten vorgesehen, deren granulieraktiver Flächenbereich durch die Leistenkanten gebildet wird, die in der Peripherie des Rotors liegen. In diesem Bereich entsteht eine hohe Flächenpressung. Dies hat für Produkte mit einem relativ hohen Feuchtegehalt, beispielsweise Lecithin oder Vitamin den Nachteil, daß hierdurch ein schonendes Granulieren aufgrund der Druckempfindlichkeit solcher Produkte nicht möglich ist.

Daher liegt der Erfindung die Aufgabe zugrunde, eine Vorrichtung der eingangs genannten Art dahingehend weiterzuentwickeln, daß eine schonende Granulierung von Feuchtprodukten ermöglicht wird.

Diese Aufgabe wird erfindungsgemäß dadurch gelöst, daß zum Granulieren von viskosen oder pastösen Feuchtprodukten das Behandlungselement frei drehbar im Rotor gelagert ist und einen in der Rotorperipherie liegenden zylindrischen granulieraktiven Flächenbereich aufweist.

Die Erfindung zeichnet sich dadurch aus, daß durch die freie Lagerung des Behandlungselementes im Rotor ein Produktstau im Bereich der granulieraktiven Volumina verhindert wird. Die Erfindung basiert auf der Erkenntnis, daß bei herkömmlichen Granulatoren in diesen Flächenbereichen ein "Keil" von Produktanteilen entsteht, wodurch eine hohe lokale Flächenpressung erfolgt. Gemäß der vorgeschlagenen Lösung wird ein solcher Keil vermieden, indem eine entsprechende Anpassung von granulieraktiver Oberfläche und gegenüber dem Gehäuse gebildetem Ringraum entsteht. Hierdurch erfolgt ein schonendes Granulieren, welches insbesondere auch für Feuchtprodukte wie Lecithin oder Vitamin durchführbar ist, ohne daß unzulässig hohe Drücke entstehen.

Bevorzugte Ausführungsformen gehen aus den Unteransprüchen hervor.

Insbesondere ist vorteilhaft, wenn entlang des Rotorumfangs versetzt sechs Walzen angeordnet sind, deren Wellenenden jeweils in an den Rotorstirnflächen ausgebildeten Lagern einliegen. Eine solche Lösung ist konstruktiv einfach aufbaubar, wobei mindestens zwei solcher Walzen zur Funktion der Vorrichtung erforderlich sind. Aus Symmetriegründen ist es jedoch vorteilhaft, wenn auf dem Umfang des Rotors gleichmäßig versetzt insgesamt 6 Walzen angeordnet sind. Jede der Walzen ist dabei frei drehbar mit ihren Wellenenden in Lagern an den Rotorstirnflächen eingesetzt. Je nach Viskosität des zu behandelnden Materials stellt sich nun die Relativbewegung zwischen Rotor einerseits und den Walzen andererseits so ein, daß es nicht zu übermäßigem Produktstau in den granulieraktiven Bereichen kommt.

Die Erfindung wird im folgenden anhand eines Ausführungsbeispieles näher beschrieben. Dabei zeigen
- Fig. 1.: ein Ausführungsbeispiel eines erfindungsgemäßen Feingranulators im Längsschnitt
- Fig. 2: eine Draufsicht zu Fig. 1
- Fig. 3: eine Seitenansicht bzw. einen Seitenschnitt zu Fig. 1
- Fig. 4: den Rotor des erfindungsgemäßen Feingranulators im Querschnitt und
- Fig. 5: den Rotor nach Fig. 4 im Längsschnitt.

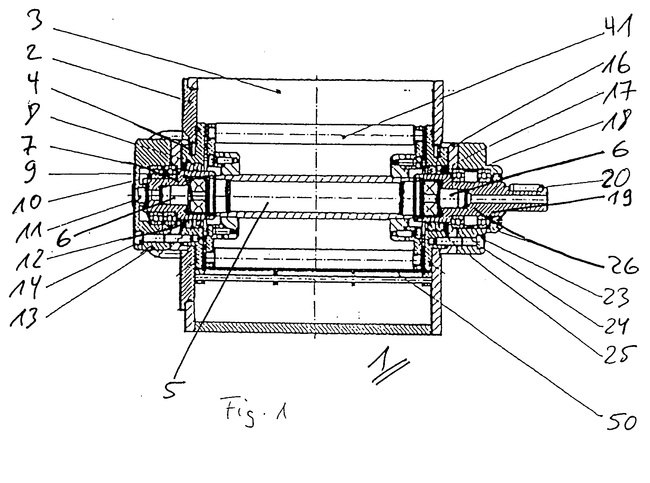

Unter Bezugnahme auf Fig. 1 ist mit dem Bezugszeichen 1 allgemein das Gehäuse des erfindungsgemäßen Feingranulators bezeichnet.

An der Oberseite des Gehäuses 1 ist ein Deckel 2 vorgesehen, welcher eine Einfüllöffnung 3 aufweist und über Zylinderstifte 4 in das Gehäuse 1 einsetzbar ist.

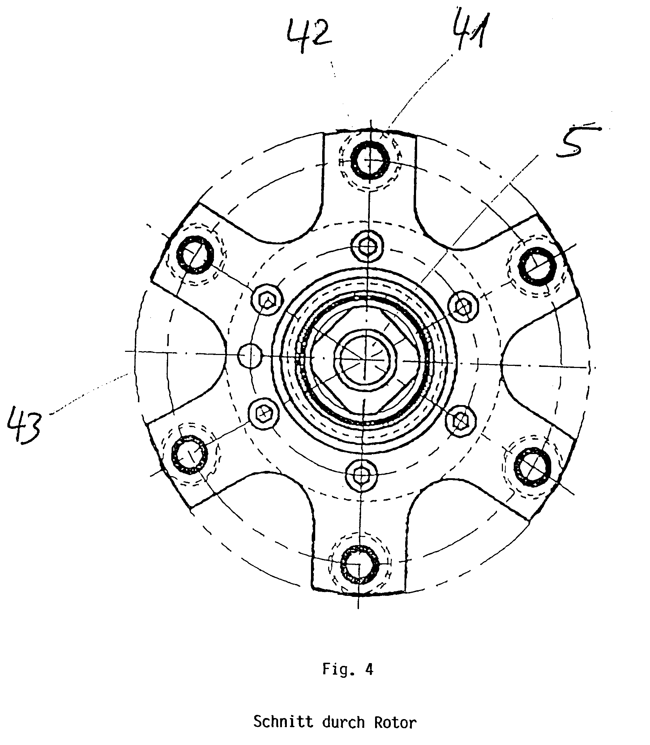

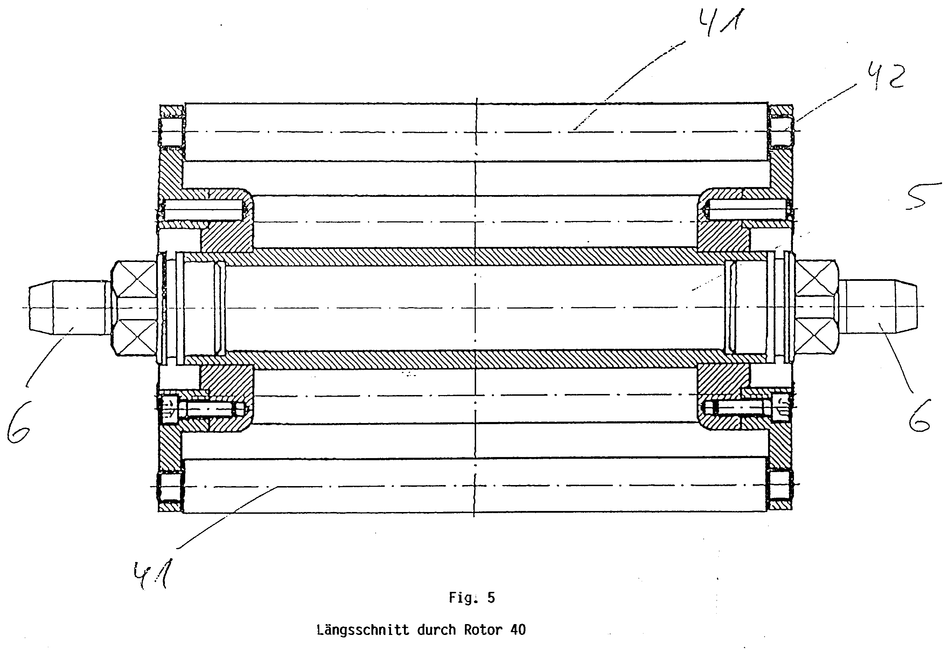

Innerhalb des Gehäuses 1 ist drehbar gelagert eine Rotorwelle 5 eines Rotors 40 (Fig. 4,5) eingesetzt.

Der äußere Umfang (Peripherie) des Rotors 40 grenzt unmittelbar an die Innenwandung des Siebgewebes 50 (gespannt im Siebkorb).

Die Lagerung der Rotorwelle 5 erfolgt durch die Aufnahme von Wellenzapfen 6 mittels einer ersten Aufnahmewelle 7 und einer weiteren Aufnahmewelle 26, jeweils an beiden Seiten des Gehäuses 1.

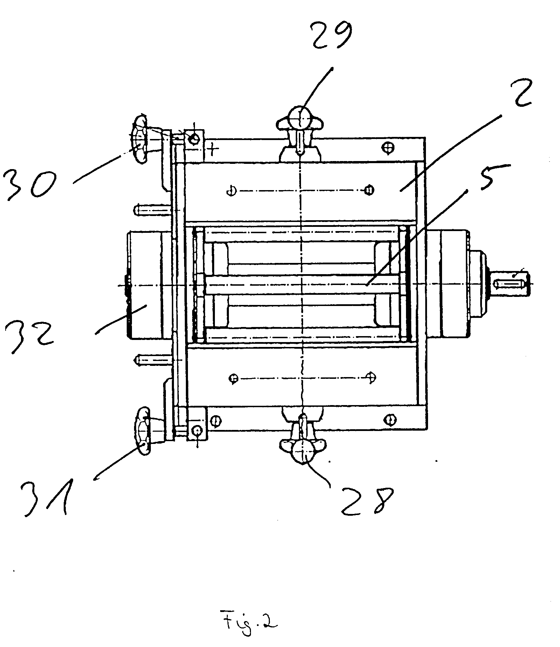

Dabei weist das Gehäuse einen Innenflansch 8 auf sowie einen Außenflansch 13, der mit dem Innenflansch 8 verschraubt ist. Zur Lagerung der Aufnahmewelle 7 ist ein Rillenkugellager 9 vorgesehen, welches über einen Sicherungsring 10 und einen O-Ring 12 abgedichtet ist. Über eine Verschlußschraube 11 ist ein seitlicher Revisionsdeckel 32 (Fig. 2) aufgesetzt, welcher über Sterngriffe 30,31 vom Gehäuse 1 lösbar ist.

Auf der gegenüberliegenden Seite des Gehäuses 1 ist zur Aufnahme des weiteren Wellenzapfens 6 der Rotorwelle 5 ebenfalls eine weitere Aufnahmewelle 26 vorgesehen, die über einen Zwischenflansch 16 und einen Außenflansch 19 gehalten ist. Die Lagerung erfolgt über einen Radialwellendichtring 17 bzw. einen weiteren Radialwellendichtring und ein weiteres Rillenkugellager 24 sowie einen weiteren O-Ring 25.

Der Antrieb der Rotorwelle 5 über einen nicht dargestellten Antriebsmotor erfolgt unter Einschaltung einer Kupplung, die über eine Paßfeder 20 mit dem Flansch 19 verbunden ist.

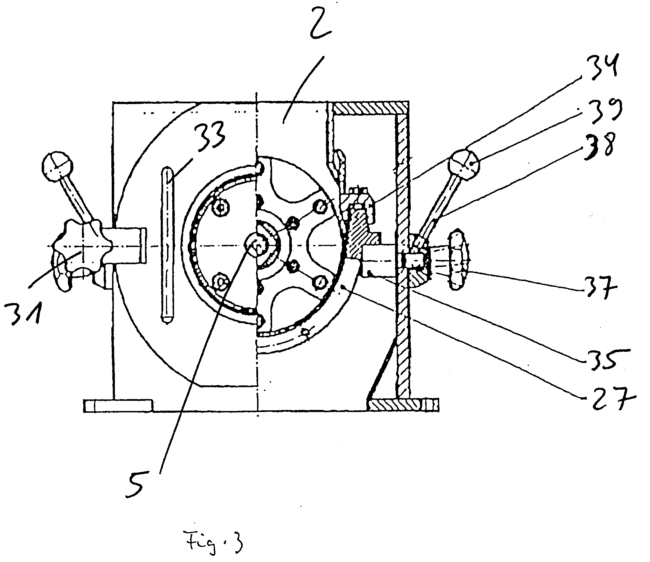

An der Unterseite des Gehäuses 1 befindet sich fluchtend mit der Innenwandung des Gehäuses 1 ein abnehmbarer Siebkorb 27 (Fig. 3). Der Siebkorb 27 ist über eine Spannleiste 34 gehalten, die entsprechend im Gehäuse 1 verschraubt ist. Dabei stützt sich der Siebkorb 27 gegen eine Exzenterwelle 35, die von außerhalb des Gehäuses 1 über einen mit einem Kugelknopf 39 versehenen Griff 38 betätigbar ist. Hierzu ist ein weiterer Flansch 36 vorgesehen, der mit einem Sterngriff 37 verbunden ist.

Auf der in Fig. 3 dargestellten Vorderseite des Feingranulators befindet sich eine Füllstandsanzeige 33.

Wie insbesondere den Fig. 4 und 5 entnehmbar ist, ist der Rotor des erfindungsgemäßen Feingranulators so ausgebildet, daß er auf seinem Umfang versetzt 6 Walzen 41 trägt, die jeweils mit ihren Wellenenden 42 frei drehbar in Lagern an den Stirnseiten des Rotors 40 einliegen. Die Abmessungen von Wellendurchmesser und Rotordurchmesser sind dabei so aufeinander abgestimmt, daß die Mantelflächen der Walzen 41 die Peripherielinie 43 des Rotors 40 tangieren.

Die erfindungsgemäße Vorrichtung arbeitet wie folgt:

Das zu granulierende Material wird durch die Einfüllöffnung 3 im Deckel 2 des Gehäuses 1 eingefüllt und gelangt in den Bereich des sich drehenden Rotors 5.

Dort wird das zu behandelnde Feuchteprodukt, insbesondere Lecithin, von den granulieraktiven Mantelflächenbereichen der Walzen 41 gegen die Innenwandbereiche des Gehäuses 1 beaufschlagt. Durch die freie Drehbarkeit der Walzen 41 in den Lagern ihrer Wellenenden 42 wird dabei ein kritischer Druckaufbau bei der Materialbeaufschlagung vermieden.

### Bezugszeichenliste

- 1.: Gehäuse
- 2.: Deckel
- 3.: Einfüllöffnung
- 4.: Zylinderstift
- 5.: Rotorwelle
- 6.: Wellenzapfen
- 7.: Aufnahmewelle
- 8.: Innenflansch
- 9.: Rillenkugellager
- 10.: Sicherungsring
- 11.: Verschlußschraube
- 12.: O-Ring
- 13.: Außenflansch
- 14.: Befestigungsschraube
- 15.: Befestigungsstift
- 16.: Zwischenflansch
- 17.: Radialwellendichtring
- 18.: weiterer Sicherungsring
- 19.: weiterer Außenflansch
- 20.: Paßfeder
- 23.: Radialwellendichtung
- 24.: weiteres Rillenkugellager
- 25.: weiterer O-Ring
- 26.: weitere Aufnahmewelle
- 27: . Siebkorb
- 28.: Deckelverschlußeinrichtung
- 29.: weitere Deckelverschlußeinrichtung
- 30.: Sterngriff
- 31: . weiterer Sterngriff
- 32.: Revisionsdeckel
- 33.: Füllstandsanzeige
- 34.: Spannleiste
- 35.: Exzenterwelle
- 36.: Flansch
- 37.: weiterer Sterngriff
- 38.: Griff
- 39.: Kugelknopf
- 40.: Rotor
- 41.: Behandlungselement
- 42.: Wellenende
- 43.: Rotorperipherie
- 44.: Ringraum
- 50.: Siebgewebe

## Patentansprüche

1. Vorrichtung zum Granulieren von Produkten mit einem an seiner Oberseite eine Einfüllöffnung (3) für das Produkt aufweisenden Gehäuse (1), an dessen Unterseite eine Austrittsöffnung für das granulierte Produkt vorgesehen ist, und mit einem drehbar im Gehäuse (1) gelagerten antreibbaren Rotor (40), auf dessen Peripherie (43) Behandlungselemente angeordnet sind, mittels denen das Produkt beim Drehen des Rotors (40) durch eine Siebvorrichtung gedrückt wird
**dadurch gekennzeichnet**, daß zum Granulieren von viskosen oder pastösen Feuchtprodukten das Behandlungselement frei drehbar im Rotor gelagert ist und einen in der Rotorperipherie (43) liegenden zylindrischen granulieraktiven Flächenbereich aufweist.

2. Vorrichtung nach Anspruch 1,
**dadurch gekennzeichnet**, daß die zylindrischen Behandlungselemente Walzen (41) sind, deren Durchmesser so bemessen sind, daß er die Rotorperipherie (43) tangiert.

3. Vorrichtung nach einem der vorhergehenden Ansprüche,
**dadurch gekennzeichnet**, daß entlang des Rotorumfangs versetzt sechs Walzen (41) angeordnet sind, deren Wellenenden (42) jeweils in an den Rotorstirnflächen ausgebildeten Lagern einliegen.

4. Vorrichtung nach einem der vorhergehenden Ansprüche,
**dadurch gekennzeichnet**, daß das Gehäuse einen abnehmbaren Deckel (2) aufweist, der über Zylinderstifte (4) in das Gehäuse (1) einsetzbar ist.

5. Vorrichtung nach einem der vorhergehenden Ansprüche,
**dadurch gekennzeichnet**, daß die Siebeinrichtung (27) an der Unterseite des Gehäuses (1) lösbar durch eine Spannleiste (33) befestigt ist.

6. Vorrichtung nach einem der vorhergehenden Ansprüche,
**dadurch gekennzeichnet**, daß die Siebeinrichtung (27) von einer Exzenterwelle (35) getragen ist, die mittels einer Griffvorrichtung (37, 38, 39) von außen betätigbar ist.
